# EUROPÄISCHE PATENTSCHRIFT

(11) **EP 4 031 761 B1**
(45) Veröffentlichungstag und Bekanntmachung des Hinweises auf die Patenterteilung: **01.05.2024**
(21) Anmeldenummer: 20781309.8
(22) Anmeldetag: 17.09.2020
(51) Int. Cl.: F02M 21/02, F02M 21/06, F02N 19/10, F01P 5/10, F01P 11/20, B60H 1/22

(54) **KALTSTART-SYSTEM FÜR EIN MIT VERDICHTETEM GAS BETRIEBENES FAHRZEUG MIT EINER MONOVALENTEN KRAFTSTOFFVERSORGUNG**
COLD START SYSTEM FOR A VEHICLE WHICH IS OPERATED WITH COMPRESSED GAS AND WHICH HAS A MONOVALENT FUEL SUPPLY
SYSTÈME DE DÉMARRAGE À FROID POUR UN VÉHICULE FONCTIONNANT AU MOYEN DE GAZ COMPRIMÉ ET PRÉSENTANT UNE ALIMENTATION EN CARBURANT DE TYPE MONOCARBURATION

(30) Priorität: 20.09.2019 DE 102019125395
(43) Veröffentlichungstag der Anmeldung: 27.07.2022
(73) Patentinhaber: VOLKSWAGEN AG, 38440 Wolfsburg (DE)
(72) Erfinder: MAAS, Christian, 38179 Schwülper (DE); CAMPE, Mario, 38547 Calberlah (DE); HEINS, Sebastian, 38100 Braunschweig (DE); LENKOWSKI, Jörg, 38550 Isenbüttel (DE); SCHELLER, Torsten, 38444 Wolfsburg (DE)
(74) Vertreter: Gulde & Partner
(86) Internationale Anmeldenummer: PCT/EP2020/075928
(87) Internationale Veröffentlichungsnummer: WO 2021/053048

(56) Entgegenhaltungen:
- DE-A1- 4 042 123
- DE-A1-102017 218 824
- FR-A1- 3 066 556

## Beschreibung

Die Erfindung betrifft ein Kaltstart-System und ein zugehöriges Verfahren für ein mit verdichtetem Gas betriebenes Fahrzeug mit einer monovalenten Kraftstoffversorgung.

Als Stand der Technik werden die Druckschriften DE 10 2008 034 581 A1, DE 10 2014 218 632 A1 und DE 10 2014 219 500 A1 genannt. Als nächstliegender Stand der Technik wird die DE 10 2014 218 632 A1 angesehen, die eine Vorrichtung zur Kraftstoffversorgung für ein mit verdichtetem Gas betriebenes Fahrzeug, die eine Druckminderungseinrichtung zur Reduzierung eines Kraftstoffdruckes von einem Tankdruck auf einen Versorgungsdruck einer Kraftstoffeinblasvorrichtung aufweist, wobei die Druckminderungseinrichtung ein Gehäuse aufweist, wobei innerhalb des Gehäuses ein Expansionsbereich ausgebildet ist, in dem verdichtetes Gas expandiert wird, das Gehäuse einen als Erwärmungsbereich ausgebildeten Bereich aufweist, in dem eine Heizeinrichtung zur Erwärmung des Gehäuses angeordnet ist, und zumindest eine Regeleinrichtung der Heizeinrichtung zur Regelung der Erwärmung vorgesehen ist. Die Beheizung wird mittels einer Steuerungseinheit samt Software geregelt. Als Beheizung werden entweder elektrische Heizelemente oder die Durchströmung von Kühlwasser oder eine Kombination beschrieben.

Bekannt ist ferner die Druckschrift DE 40 42 123 A1, die eine Standheizung mit einer Standheizungsschaltung offenbart, bei der mittels eines aufgeheizten Kühlmittels ein Innenraum über einen Wärmetauscher beheizt werden kann, wobei die Wärme der Standheizung zur Beheizung einer Brennkraftmaschine genutzt werden kann. Die Druckschrift beschäftigt sich insbesondere mit der spezifischen Ausgestaltung und Funktion eines Thermostates, das in der Standheizungsschaltung angeordnet ist.

Der Erfindung liegt ausgehend vom Stand der Technik die Aufgabe zugrunde, ein Kaltstart-System für ein Kraftstoffversorgungssystem einer Brennkraftmaschine zu schaffen, bei dem eine Vereisung von Bauteilen des Kraftstoffversorgungssystems auf möglichst effiziente Weise vermieden wird.

Es wird ferner ein dem erfindungsgemäßen Kaltstart-System zugehöriges Verfahren beschrieben, das zur Sicherung der Kaltstartfähigkeit eines mit verdichtetem Gas betriebenen Fahrzeuges mit einer monovalenten Kraftstoffversorgung dient.

Die wesentlichen Merkmale der Basisvariante des erfindungsgemäßen Kaltstart-Systems für eine monovalente mit einem Gas betriebene Brennkraftmaschine sind:
- Mindestens ein ebenfalls mit dem Gas betriebenes Standheizungs-Aggregat, welches ein Kreislauf-Fluid erwärmt.
- Das Fluid wird in einem Standheizung-Vorwärmkreislauf geführt, in dem eine Vorwärmkreislauf-Pumpe angeordnet ist.
- Der Vorlauf des Standheizung-Vorwärmkreislaufs weist mindestens einen ersten Abzweig zu einem Vorlauf eines Heizkreislaufs auf, wobei in dem Heizkreislauf mindestens ein Gasdruckregler angeordnet ist.
- Ein Rücklauf des Heizkreislaufs ist in den Rücklauf des Standheizung-Vorwärmkreislaufs eingebunden.
- Erfindungsgemäß kann somit der mindestens eine Gasdruckregler eines Kraftstoffversorgungssystems einer monovalenten Brennkraftmaschine zur Herstellung der Betriebssicherheit des Kraftstoffversorgungssystems erwärmt werden.

Mit der Basisvariante des erfindungsgemäßen Kaltstart-Systems können in Abhängigkeit des Betriebszustandes AUS/EIN der Brennkraftmaschine unterschiedliche Betriebsmodi (erster und fünfter Betriebsmodus) gefahren werden, wobei die Betriebsmodi in der Beschreibung näher erläutert sind.

Das erfindungsgemäße Kaltstart-System weist bevorzugte Erweiterungen der Basisvariante auf, die es ermöglichen weitere Betriebsmodi zu fahren.

Eine erste Ausführungsvariante besteht, ausgehend von der Basisvariante, in der Einbindung eines Innenraum-Heizkreislaufs in das Kaltstart-System.
- Bevorzugt weist der Vorlauf des Standheizung-Vorwärmkreislaufs einen zweiten Abzweig auf, der in einem Innenraum-Heizkreislauf mündet.
- Der Innenraum-Heizkreislauf steht fluidseitig mit einem temperaturabhängig öffenbaren Kühlkreislauf zur Kühlung der Brennkraftmaschine in Verbindung.
- In dem Innenraum-Heizkreislauf sind schalt- und/oder regelbare Ventile angeordnet, die den Vorlauf und/oder den Rücklauf des Innenraum-Heizkreislaufs in Abhängigkeit vorgebbarer Betriebsmodi schließen oder freigeben.
- Insbesondere ist ein erstes schalt- und/oder regelbares Ventil im Vorlauf des Innenraum-Heizkreislaufs stromab des ersten und zweiten Abzweigs vor dem temperaturabhängig öffenbaren Kühlkreislauf zur Kühlung der Brennkraftmaschine angeordnet.
- Ferner ist insbesondere ein zweites schalt- und/oder regelbares Ventil im Rücklauf des Innenraum-Heizkreislaufs stromab der Einkopplung des Rücklaufs des Heizkreislaufs des zu erwärmenden Gasdruckreglers und des Rücklaufs des Standheizung-Vorwärmkreislaufs vor der Innenraumheizung angeordnet.
- Ein Rücklauf des Heizkreislaufs des zu erwärmenden Gasdruckreglers ist in den Rücklauf des Innenraum-Heizkreislaufs eingekoppelt, sodass auch der Rücklauf des Standheizung-Vorwärmkreislaufs über den Rücklauf des Innenraum-Heizkreislaufs geführt ist.

Mit der ersten Ausführungsvariante des Kaltstart-Systems können in Abhängigkeit des Betriebszustandes AUS/EIN der Brennkraftmaschine unterschiedliche Betriebsmodi (zweiter und sechster Betriebsmodus) gefahren werden, wobei bei diesen Betriebsmodi mittels des Standheizungs-Aggregats mehrere zu beheizende Komponenten beheizt werden können, wobei die Betriebsmodi in der Beschreibung näher erläutert sind.

Eine noch weiter erweiterte zweite Ausführungsvariante besteht ausgehend von der ersten Ausführungsvariante in der Einbindung eines Kühlkreislaufs der Brennkraftmaschine - Heizkreislaufs in das Kaltstart-System.
- Bevorzugt stehen der temperaturabhängig öffenbare Kühlkreislauf zur Kühlung der Brennkraftmaschine und der Innenraum-Heizkreislauf zumindest fluidseitig über ein der Brennkraftmaschine zugeordnetes Kühlmodul in Verbindung.
- In dem Kühlkreislauf ist eine Kühlwasserpumpe angeordnet, die sobald die Brennkraftmaschine in Betrieb ist, den Innenraum-Heizkreislauf aktiviert, insofern beide schalt- und/oder regelbaren Ventile zumindest in einer teilweisen Offenstellung betätigt sind.

Mit der zweiten Ausführungsvariante des Kaltstart-Systems können in Abhängigkeit des Betriebszustandes AUS/EIN der Brennkraftmaschine unterschiedliche Betriebsmodi (ein dritter und siebter Betriebsmodus sowie eine vierter und achter Betriebsmodus) gefahren werden, wobei bei diesen Betriebsmodi mittels des Standheizungs-Aggregats mehrere zu beheizende Komponenten und der Kühlkreislauf beheizt werden können, wobei die Betriebsmodi ebenfalls in der Beschreibung näher erläutert sind.

Die Erfindung wird nachfolgend anhand der zugehörigen Zeichnungen erläutert. Es zeigen:
- Figur 1: das erfindungsgemäße Kaltstart-System in einem ersten Betriebsmodus bei einer Brennkraftmaschine im Nichtbetriebszustand;
- Figur 2: das erfindungsgemäße Kaltstart-System in einem zweiten Betriebsmodus bei einer Brennkraftmaschine im Nichtbetriebszustand;
- Figur 3: das erfindungsgemäße Kaltstart-System in einem dritten Betriebsmodus bei einer Brennkraftmaschine im Nichtbetriebszustand;
- Figur 4: das erfindungsgemäße Kaltstart-System in einem vierten Betriebsmodus bei einer Brennkraftmaschine im Nichtbetriebszustand;
- Figur 5: das erfindungsgemäße Kaltstart-System in einem fünften Betriebsmodus bei einer Brennkraftmaschine im Betriebszustand;
- Figur 6: das erfindungsgemäße Kaltstart-System in einem sechsten Betriebsmodus bei einer Brennkraftmaschine im Betriebszustand;
- Figur 7: das erfindungsgemäße Kaltstart-System in einem siebten Betriebsmodus bei einer Brennkraftmaschine im Betriebszustand; und
- Figur 8: das erfindungsgemäße Kaltstart-System in dem achten Betriebsmodus bei einer Brennkraftmaschine im Betriebszustand.

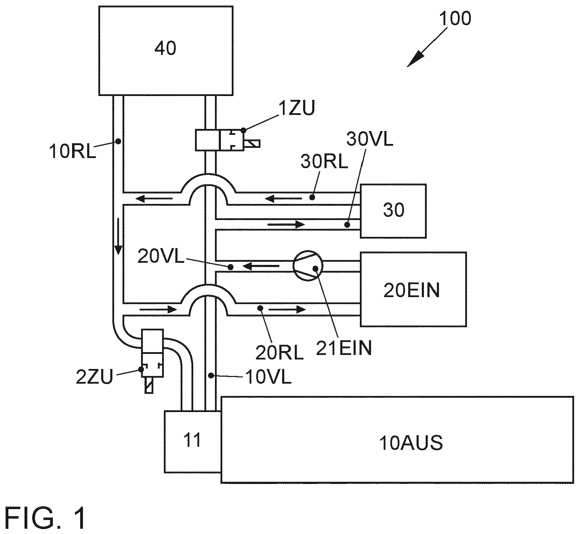

Zur Erläuterung der Erfindung werden zunächst in Zusammenschau der Figuren 1 bis 8 die Komponenten des Kaltstart-Systems 100 vorgestellt.

Das Kaltstart-System 100 umfasst eine Brennkraftmaschine 10 mit einem herkömmlichen Kühlsystem, welches in den Figuren als Kühlmodul 11 symbolisiert ist. Der von dem Kühlmodul abgehende bekannte Kühlkreislauf ist in den Figuren 1 bis 8 nicht explizit dargestellt.

Die Brennkraftmaschine 10 wird erfindungsgemäß ausschließlich mit verdichtetem Gas betrieben, das heißt, der Brennkraftmaschine 10 ist eine monovalente Kraftstoffversorgung zugeordnet.

In herkömmlicher Weise weist das Kühlmodul 11 einen vom Kühlmodul 11 abzweigenden Innenraum-Heizkreislauf 10VL, 10RL auf, der zur Beheizung eines Fahrzeuginnenraumes mittels einer Innenraumheizung 40 dient.

Die in der Brennkraftmaschine 100 entstehende Wärme wird über entsprechende Wärmetauscher (nicht dargestellt) im Bereich der Innenraumheizung 40 und im Bereich des Kühlmoduls 11 über den Innenraum-Heizkreislauf 10VL, 10RL mittels eines Fluids in den Fahrzeuginnenraumes des Fahrzeuges übertragen.

Ein Innenraum-Heizkreislauf-Vorlauf ist mit dem Bezugszeichen 10VL gekennzeichnet. Ein Innenraum-Heizkreislauf-Rücklauf ist mit dem Bezugszeichen 10RL gekennzeichnet.

Im Innenraum-Heizkreislauf-Vorlauf 10VL ist ein erstes Ventil 1 angeordnet. Im Innenraum-Heizkreislauf-Rücklauf 10RL ist ein zweites Ventil 2 angeordnet.

Im Innenraum-Heizkreislauf-Vorlauf VL sind vor dem ersten Ventil 1 ein Standheizungs-Vorlauf 20VL eines Standheizungs-Vorwärmkreislaufs 20VL, 20RL und ein Gasdruckregler 30 mit einem Gasdruckregler-Heizkreislauf-Vorlauf 30 VL eines Gasdruckregler-Heizkreislaufs 30VL, 30RL eingebunden. Dem Gasdruckregler 30 wird Wärme aus dem Kaltstart-System 100 über den Gasdruckregler-Heizkreislauf-Vorlauf 30 VL zugeführt und über einen Wärmetauscher (nicht dargestellt) auf den Gasdruckregler 30 übertragen.

Das Standheizungs-Aggregat ist mit dem Bezugszeichen 20 gekennzeichnet.

Das Standheizungs-Aggregat 20 wird erfindungsgemäß mit verdichtetem Gas betrieben, das heißt das Standheizungs-Aggregat 20 nutzt den Brennstoff, der auch für die Brennkraftmaschine 10 benutzt wird, sodass das Fahrzeug kein zusätzliches Kraftstoffversorgungssystem zur Zuführung eines anderen Kraftstoffs benötigt.

Mit anderen Worten, die Erfindung ist darauf ausgerichtet, dass sowohl das Standheizungs-Aggregat 20 als auch die Brennkraftmaschine 10 monovalent mit dem gleichen Kraftstoff betrieben werden können, worin ein wesentlicher Vorteil des Kaltstart-Systems 100 gesehen wird.

Das Standheizungs-Aggregat 20 weist einen Wärmetauscher (ebenfalls nicht dargestellt) auf, mittels dem die Wärme auf das sich im Kaltstart-System 100 befindende Fluid übertragen wird.

Ein Standheizungs-Vorwärmkreislauf-Vorlauf ist mit dem Bezugszeichen 20VL gekennzeichnet. Ein Standheizungs-Vorwärmkreislauf-Rücklauf ist mit dem Bezugszeichen 20RL gekennzeichnet.

Im Standheizungs-Vorwärmkreislauf-Vorlauf 20VL ist eine Vorwärmkreislauf-Pumpe 21 angeordnet, die das Fluid über den Standheizungs-Vorwärmkreislauf-Vorlauf 20VL in den Innenraum-Heizkreislauf-Vorlauf 10VL fördert.

Von dem Innenraum-Heizkreislauf-Vorlauf VL geht der Gasdruckregler-Heizkreislauf-Vorlauf 30VL des Gasdruckregler-Heizkreislaufs 30VL, 30RL ab, wobei der Standheizungs-Vorwärmkreislauf-Vorlauf 20VL und der Gasdruckregler-Heizkreislauf-Vorlauf 30VL in Strömungsrichtung des Fluids gesehen nacheinander zwischen Kühlmodul 11 und dem ersten Ventil 1 in den Innenraum-Heizkreislauf-Vorlauf VL eingebunden sind.

Der Innenraum-Heizkreislauf-Rücklauf 10RL zwischen Innenraumheizung 40 und Kühlmodul 11 umfasst das zweite Ventil 2, vor dem ein Gasdruckregler-Heizkreislauf-Rücklauf 30RL und ein Standheizungs-Vorwärmkreislauf-Rücklauf 20RL zum Gasdruckregler 30 und zum Standheizungs-Aggregat 20 abzweigt.

Die Figuren 1 bis 8 zeigen somit einen Verrohrungs- oder Verschlauchungsplan zwischen dem Kühlmodul 11 der Brennkraftmaschine 10, eines Standheizungs-Aggregates 20 mindestens einer zu beheizenden Komponente, einem Gasdruckregler 30 und einer weiteren zu beheizenden Komponente, einer Innenraumheizung 40, und gegebenenfalls den Kühlkreislauf der Brennkraftmaschine 10 selbst, als noch weitere zu beheizende Komponenten, wobei eine hinsichtlich des Volumenstroms regelbare Pumpe 21 angeordnet ist, welche das Fluid in einem betriebsmodusabhängigen Kreislauf insgesamt oder in Teilkreisläufen des gesamten Kreislaufsystems fördert, wobei sich der Volumenstrom des Fluids in Abhängigkeit eines gewünschten Betriebsmodus und zusätzlich nach Bedarf die Temperatur des Fluids durch Leistungsanpassung des Standheizungs-Aggregates 20 ändert.

Die möglichen Betriebsmodi hängen von verschiedenen vorliegenden und gewünschten Randbedingungen des Kaltstart-Systems 100 ab, die nachfolgend detailliert erläutert werden. Die Erfindung baut auf der prinzipiellen Idee auf, die eine einem Fahrzeug integrierte Standheizung, insbesondere das Standheizungs-Aggregat 20 zu nutzen, um die Kaltstart- und Warmlauffähigkeit einer monovalenten mit einem Gas, insbesondere CNG betriebenen Brennkraftmaschine 10 sicherzustellen.

Bislang wird die Standheizung ausschließlich dazu verwendet, um hinsichtlich des Insassenkomforts eine möglichst schnelle Aufheizung des Fahrzeuginnenraumes und hinsichtlich einer Reibungsminimierung und Verbrauchsreduzierung der Brennkraftmaschine 10 eine Erwärmung der Brennkraftmaschine 10 zu erreichen.

Dabei wird die Standheizung, das heißt das Standheizungs-Aggregat 20 in bekannter Weise schon bisher bereits vor einem Start der Brennkraftmaschine 10 aktiviert.

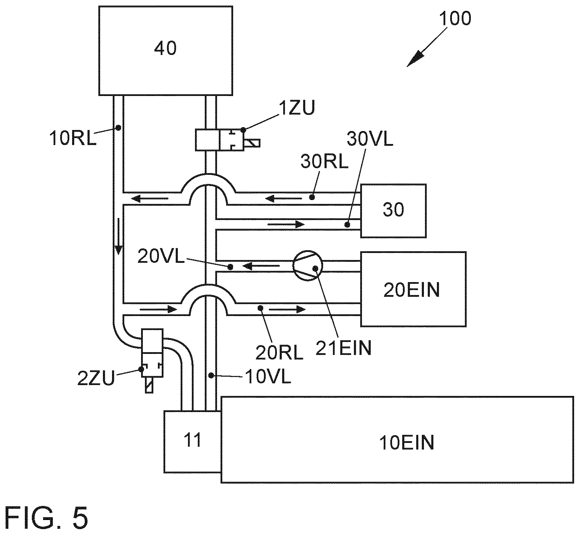

Der Gegenstand der Erfindung, mithin das Kaltstart-System 100 wird jedoch abweichend vom Stand der Technik derart ausgeführt, dass ein Kreislaufsystem mit einem Fluid vorgesehen wird, in dem das Standheizungs-Aggregat 20 zunächst exklusiv zur Beheizung des Gasdruckreglers 30 angeordnet und vorgesehen und insbesondere derart geschaltet ist, dass der Gasdruckregler 30 in einer Art Vorrangschaltung (erster und fünfter Betriebsmodus, Figuren 1 und 5) aufgeheizt wird, wie noch erläutert wird.

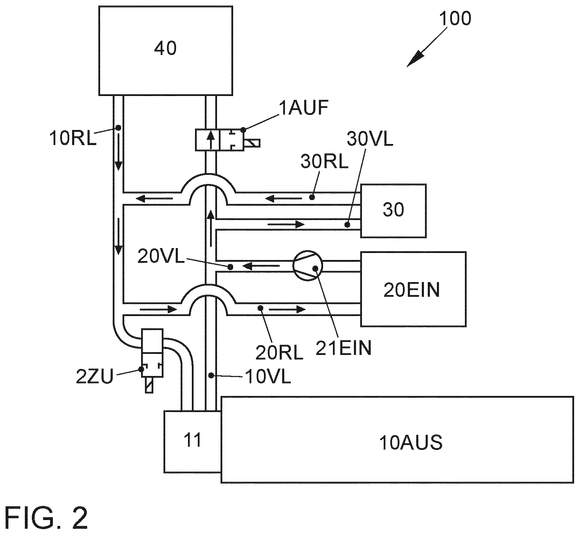

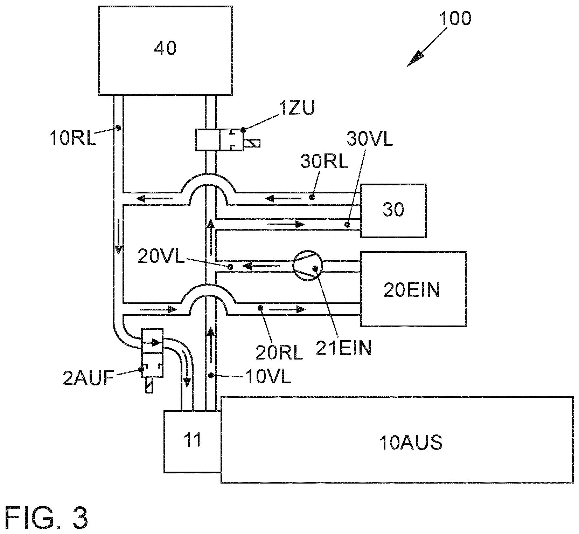

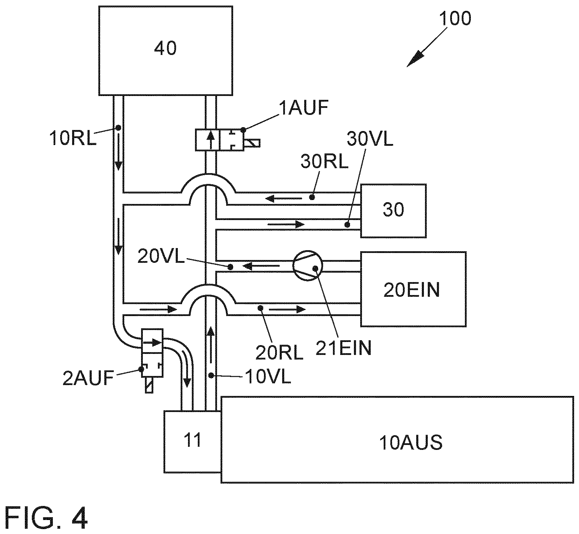

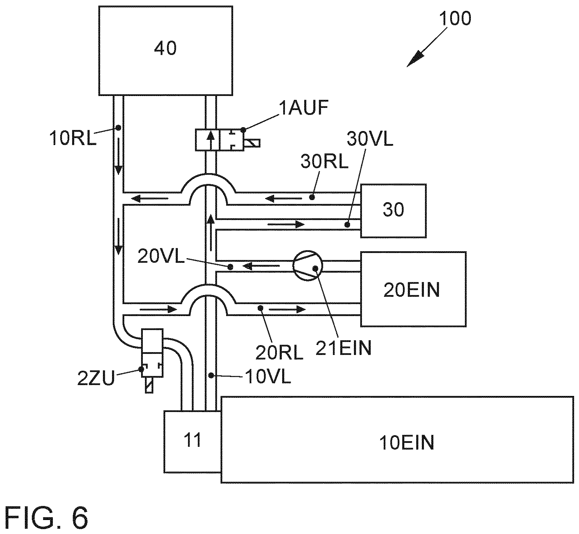

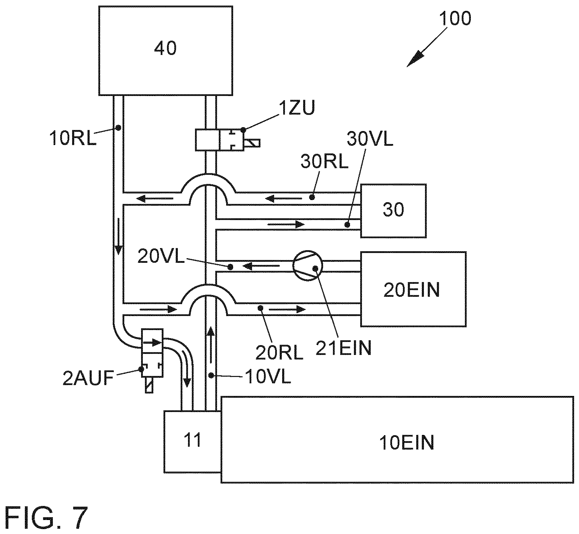

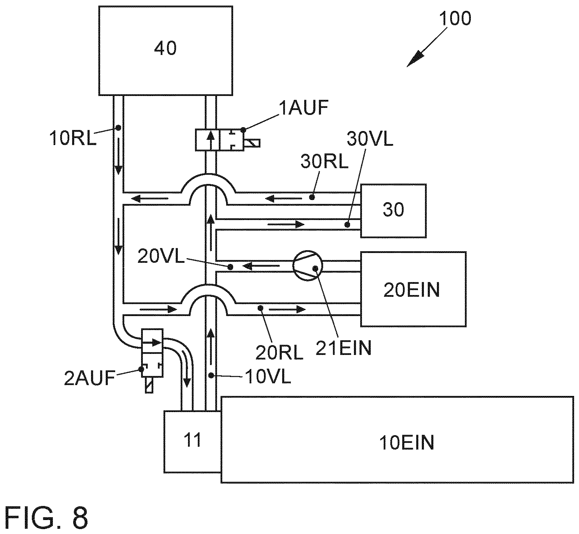

Erst nachdem sichergestellt ist, dass der Gasdruckregler 30 nicht einfriert und auch das Gas eine vorgebbare zulässige Minimaltemperatur nicht unterschreitet, werden je nach Anforderungen der Wärmetauscher der Innenraumheizung 40 (zweiter und sechster Betriebsmodus, Figuren 2 und 6) oder die Brennkraftmaschine 10 (dritter und siebter Betriebsmodus, Figuren 3 und 7) oder die Innenraumheizung 40 und die Brennkraftmaschine 10 (vierter Betriebsmodus und achter Betriebsmodus, Figuren 4 und 8) von dem Fluid innerhalb des Kaltstart-Systems 100 mit Wärme versorgt, indem die Ventile 1 und 2 entsprechend geschaltet werden, wobei von Bedeutung ist, ob die Brennkraftmaschine 10 und damit das Kühlmodul 11 der Brennkraftmaschine 10 und somit der Innenraum-Heizkreislauf 10VL, 10RL in Betrieb sind oder nicht, wie ebenfalls noch erläutert wird.

Ein Verhindern des Einfrierens des Gasdruckreglers 30 hat jedoch Priorität. Die Brennkraftmaschine 10 wird wie erläutert mit einem monovalenten CNG-Brennverfahren betrieben. Die auf den reinen Gasbetrieb optimierte Brennkraftmaschine 10 wird in einem Fahrzeug betrieben, wobei das Gas unter einem Druck von ca. 200 bar in speziellen Gastanks gespeichert und im Fahrzeug mitgeführt wird.

Die Einblasung des Gases in die Verbrennungsluft der Brennkraftmaschine erfolgt jedoch mit einem deutlichen geringeren Druckniveau bei beispielsweise ca. 16 bar. Deshalb wird das Gas durch den Gasdruckregler 30 entspannt. Der physikalische Vorgang der Expansion führt zu einer Temperaturabnahme. Bei der abzubauenden Druckdifferenz führt das in Abhängigkeit des benötigten Gas(CNG)-Massenstroms, zu einer großen Temperaturminderung von über 30K (Kelvin), die beherrscht werden muss.

Daher wird der Gasdruckregler 30 erfindungsgemäß in den Kreislauf des Kaltstart-Systems 100 eingebunden, sodass das Fluid den Gasdruckregler 30 beheizt und vor dem Einfrieren schützt.

Anders als bei einer betriebswarmen Brennkraftmaschine 10 ist der Kaltstart und der Warmlauf problematisch, da in diesen Betriebszuständen kein warmes Fluid aus dem warmen Kühlkreislauf über das Kühlmodul 11 der Brennkraftmaschine 10 zur Verfügung steht, weshalb in diesen Betriebszuständen (Kaltstart und der Warmlauf) das Standheizungs-Aggregat 20 genutzt wird, um Wärme für den Gasdruckregler 30 bereitzustellen.

Neben den zur Vereinfachung des Kaltstart-Systems 100 im Ausführungsbeispiel als Schaltventile 1 und 2 (Regelventile 1 und 2 sind nicht ausgeschlossen) ausgebildeten Ventile 1 und 2 sind die Heizleistung des Standheizungs-Aggregat 20 und die Pumpleistung der Vorwärmkreislauf-Pumpe 21 die Regelparameter des Kaltstart-Systems 100.

Nachfolgend werden zunächst die Betriebsmodi erläutert, die vor Inbetriebnahme der Brennkraftmaschine des Fahrzeuges im Kaltstart und einer nachfolgenden Warmlaufphase möglich sind. Der Kühlkreislauf der Brennkraftmaschine 10 ist nicht dargestellt, wobei davon ausgegangen wird, dass der Kühlkreislauf der Brennkraftmaschine 10 in Richtung eines nicht dargestellten Kühlers als Wärmetauscher zur Wärmeabgabe an die Umwelt geschlossen ist.

Der Kühlkreislauf der Brennkraftmaschine 10 in den Bereich der Brennkraftmaschine 10 ist jedoch offen.

Der Kühlkreislauf der Brennkraftmaschine 10 zum Kühler öffnet erst bei einer vorgebbaren Temperatur des Fluids, beispielsweise bei 90°C, wenn die Warmlaufphase beendet ist, wobei die Problematik des Einfrierens des Gasdruckreglers nach Durchlaufen der Warmlaufphase nicht mehr vorliegt.

Bezüglich der Verdeutlichung der Kreisläufe werden in den Figuren 1 bis 8 ausschließlich die aktiven Kreisläufe anhand von Richtungspfeilen innerhalb des Verrohrungs- oder Verschlauchungsplan verdeutlicht.

Die AUF/ZU-Stellung der Schaltventile 1 und 2 wird durch die Bezugszeichen 1ZU/1AUF und 2ZU/2AUF und die Aufstellung der Schaltventile wird durch einen Pfeil in dem Symbol des jeweiligen Schaltventils verdeutlicht.

Analog dazu wird anhand der Bezugszeichen 10AN/10AUS verdeutlicht, ob die Brennkraftmaschine 10 und damit das Kühlmodul 11 beziehungsweise dessen motorseitig angetriebene Kühlwasserpumpe (nicht dargestellt) aktiv ist.

Brennkraftmaschine 10 außer Betrieb 10AUS:
Die Figur 1 zeigt das erfindungsgemäße Kaltstart-System 100 in einem ersten Betriebsmodus bei einer Brennkraftmaschine 10 im Nichtbetriebszustand 10AUS.

Die Schaltventile 1 und 2 sind 1ZU und 2ZU geschlossen.

Die Standheizung 20 und die Vorwärmkreislauf-Pumpe 21 sind in Betrieb 20EIN, 21EIN.

Über die Heizleistung des Standheizungs-Aggregates 20 und die Pumpleistung der Vorwärmkreislauf-Pumpe 21 wird der Gasdruckregler 30 gewärmt und vor dem Einfrieren geschützt, da der Kreislauf 20VL → 30VL → 30RL → 10RL → 20RL aktiv ist.

Die Figur 2 zeigt das erfindungsgemäße Kaltstart-System 100 in einem zweiten Betriebsmodus bei einer Brennkraftmaschine 10 im Nichtbetriebszustand 10AUS.

Das Schaltventil 1 ist 1AUF auf und das Schaltventil 2 ist 2ZU geschlossen.

Die Standheizung 20 und die Vorwärmkreislauf-Pumpe 21 sind in Betrieb 20EIN, 21EIN.

Über die Heizleistung des Standheizungs-Aggregates 20 und die Pumpleistung der Vorwärmkreislauf-Pumpe 21 wird der Gasdruckregler 30 gewärmt und vor dem Einfrieren geschützt, da der Kreislauf 20VL → 30VL → 30RL → 10RL → 20RL aktiv ist.

Ferner ist durch das offene Schaltventil 1AUF der Kreislauf 20VL → 10VL → 10RL → 20RL aktiv, sodass parallel zu der Erwärmung des Gasdruckreglers 30 der Fahrzeuginnenraum über die Innenraumheizung 40 mit Wärme versorgt wird.

Die Figur 3 zeigt das erfindungsgemäße Kaltstart-System 100 in einem dritten Betriebsmodus bei einer Brennkraftmaschine 10 im Nichtbetriebszustand 10AUS.

Das Schaltventil 1 ist 1ZU zu und das Schaltventil 2 ist 2AUF geöffnet.

Die Standheizung 20 und die Vorwärmkreislauf-Pumpe 21 sind in Betrieb 20EIN, 21EIN.

Über die Heizleistung des Standheizungs-Aggregates 20 und die Pumpleistung der Vorwärmkreislauf-Pumpe 21 wird der Gasdruckregler 30 gewärmt und vor dem Einfrieren geschützt, da der Kreislauf 20VL → 30VL → 30RL → 10RL → 20RL aktiv ist.

Ferner ist durch das offene Schaltventil 2AUF der Kreislauf 20VL → 10VL → 30VL → 30RL → 10RL → über 2AUF → 10VL → 30VL → 30RL aktiv, sodass parallel zu der Erwärmung des Gasdruckreglers 30 der Kühlkreislauf der Brennkraftmaschine mit Wärme versorgt wird.

Die Figur 4 zeigt das erfindungsgemäße Kaltstart-System 100 in einem vierten Betriebsmodus bei einer Brennkraftmaschine 10 im Nichtbetriebszustand 10AUS.

Die Schaltventile 1 und 2 sind 1AUF und 2AUF offen.

Die Standheizung 20 und die Vorwärmkreislauf-Pumpe 21 sind in Betrieb 20EIN, 21EIN.

Über die Heizleistung des Standheizungs-Aggregates 20 und die Pumpleistung der Vorwärmkreislauf-Pumpe 21 wird der Gasdruckregler 30 gewärmt und vor dem Einfrieren geschützt, da der Kreislauf 20VL → 30VL → 30RL → 10RL → 20RL aktiv ist. Ferner ist durch das offene Schaltventil 1AUF der Kreislauf 20VL → 10VL → 10RL → 20RL aktiv, sodass parallel zu der Erwärmung des Gasdruckreglers 30 der Fahrzeuginnenraum über die Innenraumheizung 40 mit Wärme versorgt wird.

Zudem wird dadurch, dass auch das Schaltventil 2AUF geöffnet ist, auch der Kühlkreislauf der Brennkraftmaschine 10 vorgewärmt, da jetzt auch der Kreislauf 10VL → 10RL über das offene Schaltventil 2AUF aktiv ist.

Ergänzend wird nachfolgend ausgeführt, dass die vier zuvor beschriebenen Betriebsmodi auch dann gefahren werden können, wenn sich die Brennkraftmaschine 10 im Betriebszustand 10EIN befindet und die Brennkraftmaschine 10 und das Kühlmodul 11 und dessen motorseitig angetriebene Kühlwasserpumpe (nicht dargestellt) in Betrieb sind.

Brennkraftmaschine 10 in Betrieb 10EIN:
Insofern ergeben sich gemäß Figur 5 ein fünfter Betriebsmodus und gemäß Figur 6 ein sechster Betriebsmodus, wobei sich der fünfte Betriebsmodus ansonsten (außer das die Brennkraftmaschine 10EIN jetzt in Betrieb ist) nicht von dem ersten Betriebsmodus (vergleiche Figur 1 und 5) und der sechste Betriebsmodus nicht von dem zweiten Betriebsmodus (vergleiche Figur 2 und 6) unterscheidet, da das Schaltventil 2ZU jeweils geschlossen ist, sodass der Kreislauf 10VL → 10RL über das Kühlmodul 11 der Brennkraftmaschine 10 geschlossen ist.

Anders verhält es sich bei dem siebten Betriebsmodus im Vergleich zum dritten Betriebsmodus gemäß den Figuren 3 und 7 und bei dem achten im Vergleich zum vierten Betriebsmodus gemäß den Figuren 4 und 8, bei denen sich die Brennkraftmaschine 10 entweder im Betriebszustand 10AUS (dritter und vierter Betriebsmodus) oder im Betriebszustand 10EIN (siebter und achter Betriebsmodus) befindet und die Brennkraftmaschine 10 und das Kühlmodul 11 und dessen motorseitig angetriebene Kühlwasserpumpe (nicht dargestellt) in Betrieb sind.

Gemäß den Figuren 3 und 7 (dritter und siebter Betriebsmodus) ist zumindest jeweils das Schaltventil 2AUF offen (1ZU) oder gemäß den Figuren 4 und 8 (vierter und achter Betriebsmodus) sind beide Schaltventile 1 und 2 offen 1AUF, 2AUF, sodass der Kreislauf 10VL → 10RL jeweils über das Kühlmodul 11 zumindest in Richtung Kühlkreislauf über 2AUF der Brennkraftmaschine 10 oder sogar in Richtung Kühlkreislauf der Brennkraftmaschine 10 und in Richtung des Innraumes über 1AUF und 2AUF offen ist.

In dem dritten, vierten Betriebsmodus sorgt somit das Standheizungs-Aggregat 20 über den Kreislauf 20VL → 10VL → 30VL --+ 30RL → 10RL → über 2AUF → 10VL → 30VL --+ 30RL für eine Wärmezufuhr in den Bereich des Kühlkreislaufs der Brennkraftmaschine 10, sodass sich der Kühlkreislauf erwärmt, ohne dass die Brennkraftmaschine 10 in Betrieb 10AUS ist.

In dem siebten und achten Betriebsmodus gemäß den Figuren 7 und 8 sorgt das Standheizungs-Aggregat 20 über den analogen Kreislauf 20VL → 10VL → 30VL → 30RL → 10RL → über 2AUF → 10VL → 30VL → 30RL bei Bedarf für Wärme in dem Kühlkreislauf der Brennkraftmaschine 10EIN, wobei jetzt im Unterschied zu dem dritten und vierten Betriebsmodus zudem Wärme im Kühlkreislauf der Brennkraftmaschine selbst erzeugt wird, sodass die Brennkraftmaschine 10 und das gesamte Kaltstart-System 100 insgesamt schneller erwärmt wird, sodass der Wärmeeintrag in diesen Betriebsmodi durch die erzeugte Wärme im Bereich Brennkraftmaschine 10 und Kühlmodul 11 insgesamt erhöht ist, beziehungsweise gegebenenfalls die Heizleistung des Standheizungs-Aggregats 20 und/oder die Pumpleistung der Vorwärmkreislauf-Pumpe 21 als Regelparameter des Kaltstart-Systems 100 im Vergleich zu den Betriebsmodi, bei denen die Brennkraftmaschine 10 und das Kühlmodul 11 nicht in Betrieb 10AUS sind, reduziert werden kann/können.

Weitere nicht in den Figuren dargestellte Aspekte werden nachfolgend erläutert.

Vorgeschlagen wird ferner, dass in Abhängigkeit der Außentemperatur, die Vorheizung des Gasdruckreglers 30 mit Hilfe des Standheizungs-Aggregats 20 im Moment der Fahrzeugöffnung mittels Fernbedienung und/oder einer Aktivierung des Türkontaktschalters zu beginnt, wobei vorgesehen ist, dass der Nutzer beispielsweise auswählen kann, ob bereits eine Beheizung des Fahrzeuginnenraumes über die Innenraumheizung 40 stattfinden soll. Mit anderen Worten, der Nutzer wählt somit zwischen dem ersten und zweiten Betriebsmodus (gemäß den Figuren 1 und Figur 2) aus.

Vorgeschlagen wird, dass der Nutzer bereits vor Inbetriebnahme der Brennkraftmaschine 10 das Standheizungs-Aggregat 20 einschaltet, um den Fahrzeuginnenraum über die Innenraumheizung 40 zu erwärmen. In diesem Fall wird gemäß dem zweiten Betriebsmodus gemäß Figur 2 auch automatisch der Gasdruckregler 30 bereits mit Wärme versorgt.

Bei Inbetriebnahme 10EIN der Brennkraftmaschine 10 wird dann auf den jeweiligen Betriebsmodus umgeschaltet, wobei im siebten und achten Betriebsmodus der beschriebene zusätzliche Wärmeeintrag der Brennkraftmaschine 10 und des Kühlmoduls 11 zu Tragen kommt.

Ergänzend wird ausgeführt, dass nicht nur der Gasdruckregler 30, sondern auch ein Teil oder die gesamte oder zumindest der einfrierungsgefährdete Bereich, insbesondere die mit dem Gasdruckregler 30 verbundene Gasleitung des Kraftstoffversorgungssystems beheizt wird, um auch in diesem Bereich das Unterschreiten der minimalen Gastemperatur sicher zu vermeiden.

Schließlich wird offenbart, dass es prinzipiell möglich ist, die Schaltventile 1 und 2 wegzulassen, wenn sichergestellt ist, dass durch die Heizleistung des Standheizungs-Aggregats 20 und/oder die Pumpleistung der Vorwärmkreislauf-Pumpe 21 stets ausreichend Wärme am Gasdruckregler 30 beziehungsweise den benachbarten zu beheizenden Aggregaten und Leitungen und im Fahrzeuginnenraum des Fahrzeuges beziehungsweise zur Beheizung des Kühlkreislaufs der Brennkraftmaschine 10 zur Verfügung steht.

In vorteilhafter Weise kann dadurch eine monovalente Brennkraftmaschine 10 den Vorteil der hohen Klopffestigkeit von Gas, insbesondere CNG als Kraftstoff durch Erhöhung des Verdichtungsverhältnisses voll ausnutzen, da der Gasdruckregler 30 hinsichtlich des Einfrierens im Kaltstartfall und in der Warmlaufphase bei dem Entspannen des Gases auf einen niedrigeren Betriebdruck, wie oben erläutert, geschützt ist. Zudem besteht nicht, wie bei bivalenten Kraftstoffversorgungssystemen die Notwendigkeit, dass zwei Kraftstoff- und Einspritzbeziehungsweise Einblassysteme (Benzin für das Standheizungs-Aggregat und Gas für die Brennkraftmaschine) integriert werden müssen. Außerdem werden durch die Ausbildung eines mit Fluid gefüllten Kreislaufs des Kaltstart-Systems 100, der mit der Brennkraftmaschine 10 und dem Kühlmodul 11 fluidseitig in Verbindung steht, keine elektrischen Heizelemente benötigt, sodass keine elektrische Energie, die erst durch mehrfache Energiewandlung (und deshalb mit einem ungünstigen Wirkungsgrad) erzeugt werden muss, da ferner zu berücksichtigen ist, dass unter extrem kalten Bedingungen aufgrund der temperaturabhängigen Batteriekapazität tendenziell nur sehr begrenzt elektrische Energie zur Verfügung steht.

### Bezugszeichenliste

- 100: Kaltstart-System
- 10: Brennkraftmaschine
- 10EIN: Brennkraftmaschine in Betrieb
- 10AUS: Brennkraftmaschine außer Betrieb
- 10VL, 10 RL: Innenraum-Heizkreislauf
- 11: Kühlmodul
- 20: Standheizungs-Aggregat
- 20EIN: Standheizungs-Aggregat EIN
- 21EIN: Vorwärmekreislauf-Pumpe EIN
- 20VL, 20RL: Standheizung-Vorwärmkreislauf
- 21: Vorwärmkreislauf-Pumpe
- 30: Gasdruck
- 30VL, 30RL: Gasdruckregler-Heizkreislauf
- 40: Innenraumheizung
- 1: erstes Schaltventil
- 1AUF: erstes Schaltventil AUF
- 1ZU: erstes Schaltventil ZU
- 2: zweites Schaltventil
- 2AUF: zweites Schaltventil AUF
- 2ZU: zweites Schaltventil ZU

## Patentansprüche

1. Kaltstart-System (100) für eine monovalente mit einem Gas betriebene Brennkraftmaschine (10), umfassend mindestens ein ebenfalls mit dem Gas betriebenes Standheizungs-Aggregat (20), welches ein Kreislauf-Fluid erwärmt, das in einem Standheizung-Vorwärmkreislauf (20VL, 20RL) geführt ist, in dem eine Vorwärmkreislauf-Pumpe (21) angeordnet ist, wobei ein Vorlauf (20VL) des Standheizung-Vorwärmkreislaufs (20VL, 20RL) mindestens einen ersten Abzweig zu einem Vorlauf (30VL) eines Heizkreislaufs (30VL, 30RL) mindestens einer zu erwärmenden Komponente aufweist, dessen Rücklauf (30RL) in den Rücklauf (20RL) des Standheizung-Vorwärmkreislaufs (20VL, 20RL) eingebunden ist, **dadurch gekennzeichnet, dass** die zu erwärmende Komponente ein Gasdruckregler (30) eines Kraftstoffversorgungssystems der monovalenten Brennkraftmaschine (10) ist.

2. Kaltstart-System (100) nach Anspruch 1, **dadurch gekennzeichnet, dass** der Vorlauf (20VL) des Standheizung-Vorwärmkreislaufs (20VL, 20RL) einen zweiten Abzweig aufweist, der in einem Innenraum-Heizkreislauf (10VL, 10RL) mündet, wobei der Innenraum-Heizkreislauf (10VL, 10RL) fluidseitig mit einem temperaturabhängig öffenbaren Kühlkreislauf zur Kühlung der Brennkraftmaschine (10) in Verbindung steht, wobei in dem Innenraum-Heizkreislauf (10VL, 10RL) schalt- und/oder regelbare Ventile (1, 2) angeordnet sind, die den Vorlauf (10VL) und/oder den Rücklauf (10RL) des Innenraum-Heizkreislaufs (10VL, 10RL) in Abhängigkeit vorgebbarer Betriebsmodi schließen oder freigeben.

3. Kaltstart-System (100) nach den Ansprüchen 1 und 2, **dadurch gekennzeichnet, dass** ein Rücklauf (30RL) des Heizkreislaufs (30VL, 30RL) des zu erwärmenden Gasdruckreglers (30) in den Rücklauf (10RL) des Innenraum-Heizkreislaufs (10VL, 10RL) eingekoppelt ist, sodass auch der Rücklauf (20RL) des Standheizung-Vorwärmkreislaufs (20VL, 20RL) über den Rücklauf (10RL) des Innenraum-Heizkreislaufs (10VL, 10RL) geführt ist.

4. Kaltstart-System (100) nach den Ansprüchen 1 und 2, **dadurch gekennzeichnet, dass** ein erstes schalt- und/oder regelbares Ventil (1) im Vorlauf (10VL) des Innenraum-Heizkreislaufs (10VL, 10RL) stromab des ersten und zweiten Abzweigs vor dem temperaturabhängig öffenbaren Kühlkreislauf zur Kühlung der Brennkraftmaschine (10) angeordnet ist.

5. Kaltstart-System (100) nach den Ansprüchen 1 und 2, **dadurch gekennzeichnet, dass** ein zweites schalt- und/oder regelbares Ventil (2) im Rücklauf (10RL) des Innenraum-Heizkreislaufs (10VL, 10RL) stromab der Einkopplung des Rücklaufs (30RL) des Heizkreislaufs (30VL, 30RL) des zu erwärmenden Gasdruckreglers (30) und des Rücklaufs (20RL) des Standheizung-Vorwärmkreislaufs (20VL, 20RL) vor der Innenraumheizung (40) angeordnet ist.

6. Kaltstart-System (100) nach den Ansprüchen 2 und 3, **dadurch gekennzeichnet, dass** der temperaturabhängig öffenbare Kühlkreislauf zur Kühlung der Brennkraftmaschine (10) und der Innenraum-Heizkreislauf (10VL, 10RL) zumindest fluidseitig über ein der Brennkraftmaschine (10) zugeordnetes Kühlmodul (11) in Verbindung stehen, wobei in dem Kühlkreislauf eine Kühlwasserpumpe angeordnet ist, die sobald die Brennkraftmaschine (10EIN) in Betrieb ist, den Innenraum-Heizkreislauf (10VL, 10RL) aktiviert, insofern beide schalt- und/oder regelbaren Ventile (1, 2) zumindest in einer teilweisen Offenstellung (LAUF, 2AUF) betätigt sind.

## Claims

1. Cold-start system (100) for a monovalent internal combustion engine (10) which is operated with a gas, comprising at least one engine-independent-heating assembly (20) which is likewise operated with the gas and which heats a circuit fluid which is conducted in an engine-independent-heater pre-heating circuit (20VL, 20RL) in which a pre-heating-circuit pump (21) is arranged, wherein a feed (20VL) of the engine-independent-heater pre-heating circuit (20VL, 20RL) has at least one first branch to a feed (30VL) of a heating circuit (30VL, 30RL) of at least one component to be heated, the return (30RL) of which is incorporated into the return (20RL) of the engine-independent-heater pre-heating circuit (20VL, 20RL), **characterized in that** the component to be heated is a gas-pressure regulator (30) of a fuel-supply system of the monovalent internal combustion engine (10).

2. Cold-start system (100) according to Claim 1, **characterized in that** the feed (20VL) of the engine-independent-heater pre-heating circuit (20VL, 20RL) has a second branch which opens out into an interior-compartment heating circuit (10VL, 10RL), wherein the interior-compartment heating circuit (10VL, 10RL) is connected on the fluid side to a cooling circuit which is able to be opened in a temperature-dependent manner and which serves for cooling the internal combustion engine (10), wherein, in the interior-compartment heating circuit (10VL, 10RL), there are arranged switchable and/or regulable valves (1, 2) which close or open the feed (10VL) and/or the return (10RL) of the interior-compartment heating circuit (10VL, 10RL) according to predefinable operating modes.

3. Cold-start system (100) according to Claims 1 and 2, **characterized in that** a return (30RL) of the heating circuit (30VL, 30RL) of the gas-pressure regulator (30) to be heated is coupled into the return (10RL) of the interior-compartment heating circuit (10VL, 10RL), so that also the return (20RL) of the engine-independent-heater pre-heating circuit (20VL, 20RL) is routed via the return (10RL) of the interior-compartment heating circuit (10VL, 10RL).

4. Cold-start system (100) according to Claims 1 and 2, **characterized in that** a first switchable and/or regulable valve (1) is arranged in the feed (10VL) of the interior-compartment heating circuit (10VL, 10RL) downstream of the first and second branches before the cooling circuit able to be opened in a temperature-dependent manner and serving for cooling the internal combustion engine (10).

5. Cold-start system (100) according to Claims 1 and 2, **characterized in that** a second switchable and/or regulable valve (2) is arranged in the return (10RL) of the interior-compartment heating circuit (10VL, 10RL) downstream of the coupling-in point of the return (30RL) of the heating circuit (30VL, 30RL) of the gas-pressure regulator (30) to be heated and of the return (20RL) of the engine-independent-heater pre-heating circuit (20VL, 20RL) before the interior-compartment heater (40).

6. Cold-start system (100) according to Claims 2 and 3, **characterized in that** the cooling circuit able to be opened in a temperature-dependent manner and serving for cooling the internal combustion engine (10) and the interior-compartment heating circuit (10VL, 10RL) are connected at least on the fluid side via a cooling module (11) assigned to the internal combustion engine (10), wherein, in the cooling circuit, there is arranged a cooling-water pump which, as soon as the internal combustion engine (10EIN) is in operation, activates the interior-compartment heating circuit (10VL, 10RL) insofar as both switchable and/or regulable valves (1, 2) have been actuated so as to be at least in a partial open position (1AUF, 2AUF).

## Revendications

1. Système de démarrage à froid (100) pour un moteur à combustion interne monovalent (10) fonctionnant avec un gaz, comprenant au moins un groupe de chauffage auxiliaire (20) fonctionnant également avec le gaz, qui chauffe un fluide de circuit qui est guidé dans un circuit de préchauffage du chauffage auxiliaire (20VL, 20RL), dans lequel est agencée une pompe de circuit de préchauffage (21), un aller (20VL) du circuit de préchauffage du chauffage auxiliaire (20VL, 20RL) présentant au moins une première dérivation vers un aller (30VL) d'un circuit de chauffage (30VL, 30RL) d'au moins un composant à chauffer, dont le retour (30RL) est intégré dans le retour (20RL) du circuit de préchauffage du chauffage auxiliaire (20VL, 20RL), **caractérisé en ce que** le composant à chauffer est un régulateur de pression de gaz (30) d'un système d'alimentation en carburant du moteur à combustion interne monovalent (10).

2. Système de démarrage à froid (100) selon la revendication 1, **caractérisé en ce que** l'aller (20VL) du circuit de préchauffage du chauffage auxiliaire (20VL, 20RL) présente une deuxième dérivation qui débouche dans un circuit de chauffage d'habitacle (10VL, 10RL), le circuit de chauffage d'habitacle (10VL, 10RL) étant en liaison côté fluide avec un circuit de refroidissement pouvant s'ouvrir en fonction de la température pour refroidir le moteur à combustion interne (10), des soupapes (1, 2) commutables et/ou réglables étant agencées dans le circuit de chauffage d'habitacle (10VL, 10RL), lesquelles ferment ou libèrent l'aller (10VL) et/ou le retour (10RL) du circuit de chauffage d'habitacle (10VL, 10RL) en fonction de modes de fonctionnement pouvant être prédéfinis.

3. Système de démarrage à froid (100) selon les revendications 1 et 2, **caractérisé en ce qu'**un retour (30RL) du circuit de chauffage (30VL, 30RL) du régulateur de pression de gaz (30) à chauffer est couplé dans le retour (10RL) du circuit de chauffage d'habitacle (10VL, 10RL), de telle sorte que le retour (20RL) du circuit de préchauffage du chauffage auxiliaire (20VL, 20RL) passe également par le retour (10RL) du circuit de chauffage d'habitacle (10VL, 10RL).

4. Système de démarrage à froid (100) selon les revendications 1 et 2, **caractérisé en ce qu'**une première soupape commutable et/ou réglable (1) est agencée dans l'aller (10VL) du circuit de chauffage d'habitacle (10VL, 10RL) en aval de la première et de la deuxième dérivation avant le circuit de refroidissement pouvant s'ouvrir en fonction de la température pour refroidir le moteur à combustion interne (10).

5. Système de démarrage à froid (100) selon les revendications 1 et 2, **caractérisé en ce qu'**une deuxième soupape commutable et/ou réglable (2) est agencée dans le retour (10RL) du circuit de chauffage d'habitacle (10VL, 10RL) en aval du couplage du retour (30RL) du circuit de chauffage (30VL, 30RL) du régulateur de pression de gaz (30) à chauffer et du retour (20RL) du circuit de préchauffage du chauffage auxiliaire (20VL, 20RL) avant le chauffage de l'habitacle (40).

6. Système de démarrage à froid (100) selon les revendications 2 et 3, **caractérisé en ce que** le circuit de refroidissement pouvant être ouvert en fonction de la température pour refroidir le moteur à combustion interne (10) et le circuit de chauffage d'habitacle (10VL, 10RL) sont reliés au moins côté fluide par un module de refroidissement (11) associé au moteur à combustion interne (10), une pompe à eau de refroidissement étant agencée dans le circuit de refroidissement, laquelle active le circuit de chauffage d'habitacle (10VL, 10RL) dès que le moteur à combustion interne (10EIN) est en marche, dans la mesure où les deux soupapes (1, 2) commutables et/ou réglables sont actionnées au moins dans une position partiellement ouverte (1AUF, 2AUF).
